# EUROPEAN PATENT APPLICATION

(11) **EP 2 242 211 A1**
(43) Date of publication of application: **20.10.2010**
(21) Application number: 08706498.6
(22) Date of filing: 04.02.2008
(51) Int. Cl.: H04L 12/28

(54) **AN APPARATUS AND METHOD FOR MAKING WLAN DEVICES ACCESSING WIMAX NETWORK**

(71) Applicant: ZTE Corporation, Shenzhen, Guangdong 518057 (CN)
(72) Inventor: CHEN, Hang, Guangdong 518057 (CN)
(74) Representative: Hatzmann, Martin
(86) International application number: PCT/CN2008/000320
(87) International publication number: WO 2009/100581

(57) **Abstract**

The present invention provides an apparatus for enabling a wireless local area network device to access a WiMAX network, the apparatus comprises: WiMAX means, configured to encapsulate uplink data from data means into a transmission message in an 802.16e protocol format, to send the transmission message to a WiMAX base station, to re-encapsulate a received message from the WiMAX base station into downlink data that can be processed by the data means and to send the downlink data to the data means; the data means, configured to receive the downlink data from the WiMAX means and the uplink data from WLAN means and to perform processing to the uplink data and the downlink data; and the WLAN means, configured to encapsulate the downlink data received from the data means into a downlink data message in an 802.11a/b/g protocol format, to send the downlink data message to a terminal device, and to re-encapsulate the uplink data message received from the terminal device into the uplink data that can be processed by the data means. The present invention also provides a method for enabling a wireless local area network device to access a WiMAX network. Therefore the facile movement in a local area is achieved.

## Description

### Field of the Invention

The present invention relates to broadband wireless communication technology, in particular to a method and an apparatus for solving the application of the Wireless Local Area Network (WLAN) access of a World Interoperability for Microwave Access (WiMAX) terminal device.

### Background of the invention

The WiMAX, the abbreviation of the World Interoperability for Microwave Access, provides a point-to-multipoint broadband wireless access under the circumstance of multiple manufacturers in the Metropolitan Area Network based on the IEEE 802.16 standard, therefore the WiMAX is also called as IEEE Wireless Metropolitan Area Network (MAN). This technology involves the work of two international organizations, i.e., 802.16 work group of the IEEE802 standard committee and the WiMAX forum. The IEEE802.16 work group is the constitutor of the standard, while the WiMAX forum is the promoter of the IEEE 802.16 technology. The evolution and application modes of the standard will be introduced in the following text. So far, the IEEE 802.16 standard series comprises a plurality of standards such as 802.16, 802.16a, 802.16c, 802.16d, and 802.16e.

**Table 1: basic introduction of the WiMAX protocol**

| Version number | description | Working frequency band | Modulation form |
|---|---|---|---|
| 802.16 | Defining a wireless metropolitan area network single-carrier air interface, i.e., the single-carrier modulation mode of a transport frequency. | 10GHz - 66GHz | Due to the working wavelength is short, a line of sight (LOS) transmission is required and multi-path fading may be omitted, therefore a single-carrier (SC) modulation mode is still specified to be used in the standard of this frequency band. |
| 802.16a-d | Adding an air interface protocol to a non-line-of-sight (NLOS) frequency band. | 2GHz -11GHz | Due to the low working frequency, the OFDM modulation mode using multiple carriers is required and the multi-path fading must be considered, therefore the NLOS transmission is supported. |
| 802.16e | Adding support to mobility | 5GHz - 6GHz | The 802.16e physical layer implementing mode is basically the same as that of the 802.16d, the main differences lie in that the OFDMA is expanded and more support to automaticity (HO etc.) is provided. |

As a technology based on standards, the WiMAX may substitute the existing wired and DSL connecting modes to provide wireless broadband access of the last one mile. The WiMAX can provide a fixed, mobile, portable mode wireless broadband connection and can finally provide mobile wireless broadband connection without the need of a base station of line of sight. In typical cell arrangements with a radius of 3 to 10 miles, fixed and portable access applications provide a capacity of up to 40Mbps per channel, may support the demand of hundreds of commercial users using T-1 connection speed or thousands of family users using DSL connection speed at the same time and provide a sufficient bandwidth. Mobile network arrangement shall be able to provide a capacity of up to 15Mbps in a typical cell arrangement with a radius of (at most) 3 miles.

Wireless Local Area Network (WLAN) technology is defined in the IEEE 802.11 standard series. This series comprises the following 4 standards at present: 802.11, 802.11a, 802.11b and 802.11g. All these four standards use Ethernet protocol and Carrier Sense Multiple Access/Collision Avoidance technique (CSMA/CA, which substitute CSMA/CD) to achieve channel sharing.

802.11- is applied in the wireless local area network, uses 2.4GHz wave band and has a transmission rate of 1Mbps or 2Mbps. 802.11- supports both Frequency-Hopping Spread Spectrum (FHSS) and Direct-Sequence Spread Spectrum (DSSS). 802.11a, the expansion of the 802.11, uses 5GHz wave band and has a transmission rate of 54Mbps. The 802.11a supports the encoding mode of Orthogonal Frequency Division Multiplexing (OFDM) but does not support the FHSS or the DSSS. The 802.11a is applied in a wireless ATM system and is used in an access hub. The 802.11b (also called 802.11 high rate), the expansion of the 802.11, uses 2.4GHz wave band and has a transmission rate of 11Mbps (which can be reduced to 5.5Mbps, 2Mbps or 1Mbps). The 802.11b only supports the DSSS. Being a revised version of original 802.11 standard, the 802.11b implements the functions similar to those of Ethernet in a wireless manner. The 802.11g- supports short-distance wireless transmission, uses 2.4GHz wave band and has a transmission rate from 20Mbps to 54Mbps. The 802.11g supports the OFDM encoding mode. A WLAN single wireless covering access point (AP) may provide a good coverage of users within 100 to 500 meters.

The existing WiMAX terminal access devices have the following forms: a USB WiMAX wireless data card, a PCMCIA wireless data network card and a wireless WiMAX MODEM of RJ45 Ethernet access, wherein the USB WiMAX wireless data card and the PICMAC wireless data network card aim at client groups with high requirement to mobility and may implement data access in the circumstances of high speed movement. The Wireless WiMAX MODEM of RJ45 Ethernet access mainly aims at the applications of WiMAX network by family users and users in small and medium-sized enterprises. Since the number of Ethernet interfaces which provide wireless WiMAX MODEM of RJ45 Ethernet access is limited, generally the number of users that can be supported is limited (2 RJ45 interfaces are provided in general) and thus it is restricted to allow more users to access network. Moreover, in practice, computer network card must be connected to the WiMAX MODEM by twisted-pairs. The mobility is far from enough due to the puzzle of network cables in application, at the same time other uncertain factors such as aging of network cables would also affect the correct use of network.

### Summary of the invention

Considering the above problems, the present invention is provided. Therefore, the main object of the present invention is to provide an apparatus and a method for enabling a wireless local area network device to access a WiMAX network.

According to one aspect of the present invention, an apparatus for enabling a wireless local area network device to access a WiMAX network is provided, the apparatus comprises:
WiMAX means, configured to encapsulate uplink data from data means into a transmission message in an 802.16e protocol format, to send the transmission message to a WiMAX base station, to re-encapsulate a received message from the WiMAX base station into downlink data that can be processed by the data means and to send the downlink data to the data means;
the data means, configured to receive the downlink data from the WiMAX means and the uplink data from WLAN means and to perform processing to the uplink data and the downlink data; and
the WLAN means, configured to encapsulate the downlink data received from the data means into a downlink data message in an 802.11a/b/g protocol format, to send the downlink data message to a terminal device, and to re-encapsulate the uplink data message received from the terminal device into the uplink data that can be processed by the data means.

The processing to the uplink data and the downlink data by the data means comprises data forwarding, network address conversion and routing.

The received message is in the 802.16e protocol format.

The uplink data message is in the 802.11a/b/g protocol format.

The apparatus according to the present invention may also comprise a WiMAX radio frequency unit, configured to acquire a WAN side IP address and domain name server by the WiMAX means.

According to another aspect of the present invention, a method for enabling a wireless local area network device to access a WiMAX network is provided, the method comprises the following steps:
Step S202, obtain an operator IP addresses through the WAN side of a WiMAX device connected to a WiMAX base station and provide a WLAN network to a WLAN user through performing re-encapsulation to data;
Step S204, the WLAN user searches the WLAN network provided by the WiMAX device and performs connection to the WLAN to visit a destination host computer; and
Step S206, categorize and select the destination host computer and perform corresponding process according to the result of the categorizing and selecting.
Step 202 may comprise that the WiMAX device initiates a device authentication and a user authentication.

The destination host computer may comprise an indirectly connected host computer in the network, a directly connected host computer in the network and a device.

Step S206 comprises: if the destination host computer is the directly connected host computer, the WiMAX device directly forwards the data to the directly connected host computer;
if the destination host computer is the device, the WiMAX device visits the device and sends the data to the device for processing; and
if the destination host computer is the indirectly connected host computer, the WiMAX device performs network address conversion to map a WLAN address onto a Wide Area Network IP address and the data is sent to the indirectly connected host computer via a WiMAX base station.

By means of the above technical solution, the requirement of WLAN users on mobility in a local area is satisfied, the number of the users able to access the internet in the same WiMAX terminal device is increased, the cost of traditional Ethernet network wiring is reduced and the network problems resulting from such as the quality of the twisted pairs are avoided. Since the existing WLAN may provide users with a good coverage of 100 to 500 meters, all the users in this area may achieve data accessing through a wireless network card. Compared with 10/100M copper port technology of RJ45 interface used by an existing WiMAX terminal device, by the technical solution of the present invention improvements have been made on the mobility of the WLAN users, the effect of a facile movement in a local area has been achieved, the cost of the traditional Ethernet network wiring is saved and the reliability of transmission link is improved.

Other features and advantages of the present invention will be described in the following specification, and partly apparent therefrom, or understood by implementing the present invention. The objects and other advantages of the present invention will be realized and obtained through the structures specially defined in the specification, claims and drawings.

### Brief Description of the Drawings

The drawings provide a further understanding of the present invention and form a part of the present application. The exemplary embodiments and the description thereof are used to explain the present invention without unduly limiting the scope of the present invention, wherein:
Figure 1 is a schematically diagram of an apparatus for enabling a wireless local area network device to access a WiMAX network according to the present invention;
Figure 2 is a flow diagram of a method for enabling a wireless local area network device to access a WiMAX network according to the present invention; and
Figure 3 is a flow diagram of a method for enabling a wireless local area network device to access a WiMAX network according to the embodiments of the present invention.

### Detailed Description of Embodiments

The embodiments of the present invention will be described hereinafter in conjunction with the drawings thereof. It shall be understood that the preferred embodiments describe here is only used to explain the present invention without unduly limiting the scope of the present invention.

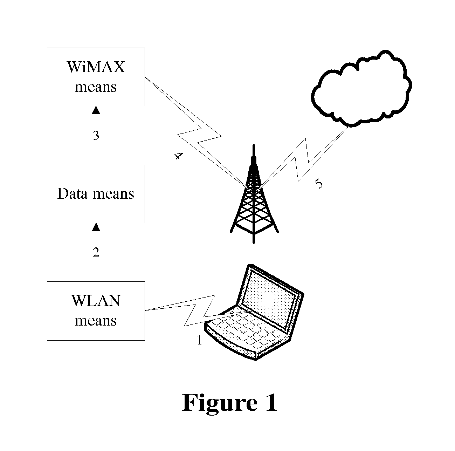

To solve the problem existing in the prior art of the lack of mobility of users in a local area network and the requirements on network wiring quality and costs, as shown in Figure 1, an apparatus for enabling a wireless local area network device to access a WiMAX network is provided, the apparatus comprises:
WiMAX means, configured to encapsulate uplink data from data means into a transmission message in an 802.16e protocol format, to send the transmission message to a WiMAX base station, to re-encapsulate a received message from the WiMAX base station into downlink data that can be processed by the data means and to send the downlink data to the data means;
the data means, configured to receive the downlink data from the WiMAX means and the uplink data from WLAN means and to perform processing to the uplink data and the downlink data; and
the WLAN means, configured to encapsulate the downlink data received from the data means into a downlink data message in an 802.11a/b/g protocol format, to send the downlink data message to a terminal device, and to re-encapsulate the uplink data message received from the terminal device into the uplink data that can be processed by the data means.

The processing to the uplink data and the downlink data by the data means comprises data forwarding, network address conversion and routing.

The received message is in the 802.16e protocol format.

The uplink data message is in the 802.11a/b/g protocol format.

The apparatus according to the present invention may also comprise a WiMAX radio frequency unit, configured to acquire a WAN side IP address and domain name server by the WiMAX means.

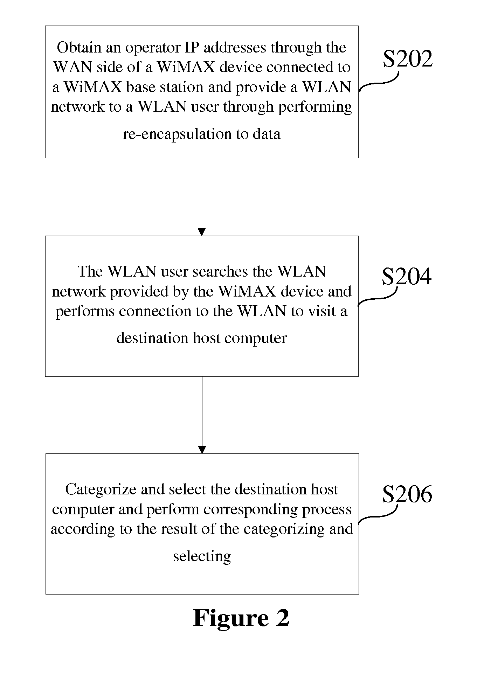

As shown in Figure 2, a method for enabling a wireless local area network device to access a WiMAX network is provided, the method comprises the following steps:
Step S202, obtain an operator IP addresses through the WAN side of a WiMAX device connected to a WiMAX base station and provide a WLAN network to a WLAN user through performing re-encapsulation to data;
Step S204, the WLAN user searches the WLAN network provided by the WiMAX device and performs connection to the WLAN to visit a destination host computer; and
Step S206, categorize and select the destination host computer and perform corresponding process according to the result of the categorizing and selecting.
Step 202 may comprise that the WiMAX device initiates a device authentication and a user authentication.

The destination host computer may comprise an indirectly connected host computer in the network, a directly connected host computer in the network and a device.

Step S206 comprises: if the destination host computer is the directly connected host computer, the WiMAX device directly forwards the data to the directly connected host computer;
if the destination host computer is the device, the WiMAX device visits the device and sends the data to the device for processing; and
if the destination host computer is the indirectly connected host computer, the WiMAX device performs network address conversion to map a WLAN address onto a Wide Area Network IP address and the data is sent to the indirectly connected host computer via a WiMAX base station.

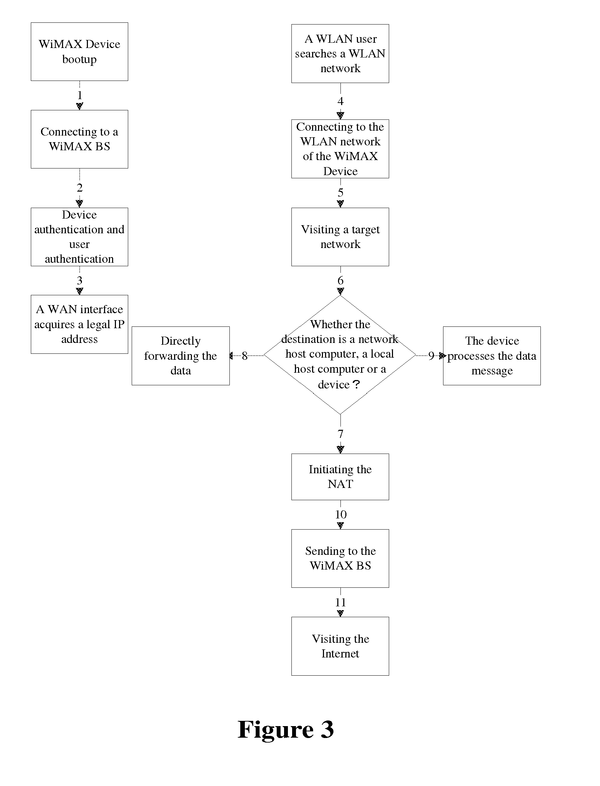

As shown in Figure 3, the method for enabling a wireless local area network device to access a WiMAX network according to the embodiments of the present invention is described in detail.
Step 1: after being powered up and completing self-starting, a WiMAX device searches the network through WiMAX means and is connected to a WiMAX BS;
Step 2: the WiMAX device initiates a device authentication and a user authentication;
Step 3: the WAN side of the WiMAX device acquires a legal operator IP address;
Step 4: a WLAN user initiates a WLAN program, searches the WLAN network and is connected to the WLAN network provided by the WiMAX device;
Step 5: the WLAN user visits a network user;
Step 6: categorize and select the destination host computer visited;
Step 7: if the host computer or services in the network (indirectly connected or the device itself) are visited, an NAT conversion is initiated to complete mapping a WLAN address onto an IP address of a WAN interface;
Step 8: if a directly connected host computer is visited, data flow is directly sent to the directly connected host computer and the WiMAX device only performs data forwarding;
Step 9: if the device itself is visited, the data is sent to the CPU of the device for corresponding processing;
Step 10: the data flow visited the network is sent to the WiMAX BS after completing the NAT conversion;
Step 11: the WiMAX BS forwards the data to the corresponding destination host computer in the Internet.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. An apparatus for enabling a wireless local area network device to access a WiMAX network, **characterized by**, comprising:
WiMAX means, configured to encapsulate uplink data from data means into a transmission message in an 802.16e protocol format, to send the transmission message to a WiMAX base station, to re-encapsulate a received message from the WiMAX base station into downlink data that can be processed by the data means and to send the downlink data to the data means;
the data means, configured to receive the downlink data from the WiMAX means and the uplink data from WLAN means and to perform processing to the uplink data and the downlink data; and
the WLAN means, configured to encapsulate the downlink data received from the data means into a downlink data message in an 802.11a/b/g protocol format, to send the downlink data message to a terminal device, and to re-encapsulate the uplink data message received from the terminal device into the uplink data that can be processed by the data means.

2. The apparatus according to claim 1, **characterized in that** the processing to the uplink data and the downlink data by the data means comprises data forwarding, network address conversion and routing.

3. The apparatus according to claim 1, **characterized in that** the received message is in the 802.16e protocol format.

4. The apparatus according to claim 1, **characterized in that** the uplink data message is in the 802.11a/b/g protocol format.

5. The apparatus according to claim 1, **characterized by**, further comprising: a WiMAX radio frequency unit, configured to acquire a WAN side IP address and domain name server by the WiMAX means.

6. A method for enabling a wireless local area network device to access a WiMAX network, **characterized by**, comprising the following steps:
Step S202, obtaining an operator IP addresses through the WAN side of a WiMAX device connected to a WiMAX base station and providing a WLAN network to a WLAN user through performing re-encapsulation to data;
Step S204, the WLAN user searching the WLAN network provided by the WiMAX device and performing connection to the WLAN to visit a destination host computer; and
Step S206, categorizing and selecting the destination host computer and performing corresponding process according to the result of the categorizing and selecting.

7. The method according to claim 6, **characterized in that** Step 202 comprises that the WiMAX device initiates a device authentication and a user authentication.

8. The method according to claim 6, **characterized in that** the destination host computer comprises an indirectly connected host computer in the network, a directly connected host computer in the network and a device.

9. The method according to claim 8, **characterized in that** Step S206 comprises:
if the destination host computer is the directly connected host computer, the WiMAX device directly forwarding the data to the directly connected host computer;
if the destination host computer is the device, the WiMAX device visiting the device and sending the data to the device for processing; and
if the destination host computer is the indirectly connected host computer, the WiMAX device performing network address conversion to map a WLAN address onto a Wide Area Network IP address and the data being sent to the indirectly connected host computer via a WiMAX base station.
